Europäisches Patentamt

European Patent Office

Office européen des brevets

(19)

(11) Numéro de publication: **0 005 656**
**B1**

(12) **FASCICULE DE BREVET EUROPEEN**

(45) Date de publication du fascicule du brevet: **28.09.83**

(51) Int. Cl.³: **B 60 S 1/40**

(21) Numéro de dépôt: **79400237.8**

(22) Date de dépôt: **12.04.79**

(54) Balai d'essuie glace pour pare brise de véhicule automobile.

(30) Priorité: **11.05.78 FR 7813957**

(43) Date de publication de la demande:
**28.11.79 Bulletin 79/24**

(45) Mention de la délivrance du brevet:
**28.09.83 Bulletin 83/39**

(84) Etats contractants désignés:
**BE DE GB IT**

(56) Documents cités:
**CH - A - 609 288**
**FR - A - 2 346 189**

(73) Titulaire: **DUCELLIER & Cie**
**Echat 950**
**F-94024 Créteil Cedex (FR)**

(72) Inventeur: **Savelli, Françis**
**98 Av. du Général de Gaulle**
**F-94500 Champigny (FR)**

(74) Mandataire: **Habert, Roger**
**DUCELLIER & Cie 2, rue Boulle Echat 950**
**F-94024 Creteil Cedex (FR)**

Courier Press, Leamington Spa, England.

Balai d'essuie glace pour pare brise de véhicule automobile

La présente invention concerne un balai d'essuie glace pour pare brise de véhicule automobile du type comportant une lame de balayage généralement en caoutchouc, ainsi qu'au moins une paire de palonniers intermédiaires servant à l'accrochage et à la répartition des forces de pression de la lame sur la pare brise et une armature principale sur laquelle sont articulés les palonniers intermédiaires qui comportent chacun un dispositif d'articulation et d'accrochage obtenu de matière avec lui par moulage de matière plastique et constitué par deux ergots cylindriques disposés chacun sur une partie souple qui constitue un côté d'au moins un logement, ménagé dans la partie centrale du palonnier et dans lequel est engagé à force, lors de l'assemblage, une pièce de verrouillage de dimensions légèrement supérieures au logement de manière à repousser vers l'extérieur les parties souples d'où les ergots dans des orifices correspondants, pratiqués dans deux joues d'articulation constituant une extrémité de l'armature principale.

Il est connu un balai d'essuie glace de ce type selon le document FR—A—2 346 189 dans lequel le verrouillage des ergots cylindriques dans les orifices correspondants de l'armature principale, s'effectue par l'intermédiaire d'une cale de remplissage coulissant longitudinalement sur le dos du palonnier, entre les parois latérales de ce dernier pour éviter le fléchissement vers l'intérieur de celles-ci au niveau des ergots d'articulation des palonniers.

L'inconvénient majeur de ce type de verrouillage réside essentiellement dans la complexité des moyens à mettre en oeuvre pour l'obtention des pièces constitutives du dispositif.

Le but de la présente invention est de remédier à ces inconvénients et concerne à cet effet un balai d'essuie glace du type précité caractérisé en ce que la pièce de verrouillage est constituée par au moins un clou dont l'introduction éloigne et maintien en position de verrouillage les deux ergots cylindriques disposés aux extrémités libres de deux languettes souples initialement incurvées l'une vers l'autre.

Selon une autre caractéristique de l'invention le clou de verrouillage est obtenu avec le palonnier au cours d'une même opération de moulage, le clou étant relié au palonnier par une très fine toile continue ou discontinue entourant le bord périphérique du logement et pouvant être aisément arraché lorsqu'une pression est exercée sur le clou, lors de l'assemblage.

La description qui va suivre en regard du dessin annexé fera mieux comprendre comment l'invention peut être réalisée.

La figure 1 est une vue partielle d'un balai d'essuie glace selon un mode d'exécution de l'invention.

La figure 2 est une vue partielle à plus grande échelle du palonnier et le l'armature avant assemblage.

La figure 3 est une vue en coupe suivant la ligne AA de la fig. 2 c'est à dire avant l'assemblage.

La figure 4 est une vue en coupe suivant la ligne BB de la fig. 1 c'est à dire après assemblage.

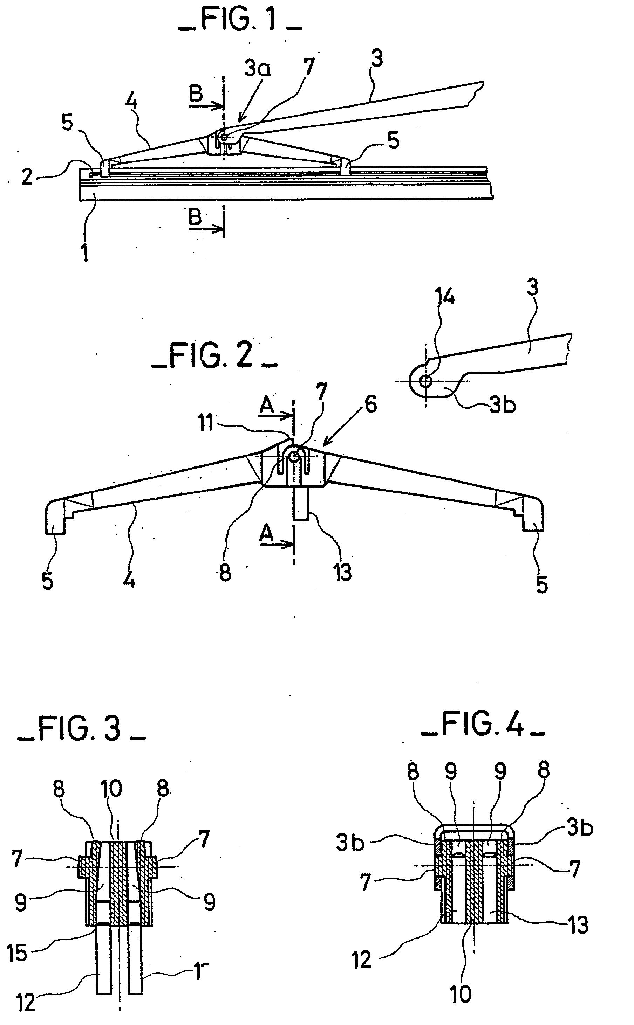

Le balai d'essuie-glace représenté partiellement sur la figure 1 comporte une lame de balayage 1 en caoutchouc qui est renforcée par deux barrettes métalliques 2 noyées dans sa partie dorsale. La lame de balayage 1 est maintenue et reliée à un levier d'entrainement (non représenté) par un armature principale 3 et par deux palonniers 4 articulés sur l'armature principale à la façon de fléaux de balance et dont les extrémités en forme de griffes 5 entourent la partie dorsale de la lame de balayage 1 et la maintiennent avec le jeu nécessaire pour obtenir un fonctionnement correct du balai d'essuie-glace.

L'armature principale 3 est une pièce ayant une section droite en forme de trapèze, exceptée la zone d'articulation 3a à l'extrémité de ladite armature qui a une section droite en forme de U. Les palonniers 4 sont des pièces en matière plastique qui représentent également une section droite en forme de trapèze.

L'armature principale 3 s'appuie au cours du fonctionnement du balai d'essuie-glace, sur les palonniers 4 par l'intermédiaire d'un dispositif d'articulation et daccrochage 6 obtenu de matière avec le palonnier 4 au cours d'une même opération de moulage et de façon à transmettre la force d'application exercée par le levier d'entrainement aux palonniers 4 et à la lame de balayagel.

Selon l'invention de dispositif d'articulation est constitué par deux ergots cylindriques 7 disposés aux extrémités libres de deux languettes souples 8 incurvées l'une vers l'autre et dont chacune d'elles constitue le côté de deux logements 9 ménagés dans la partie centrale du palonnier 4. Les deux logements 9 sont séparés par un cloison longitudinale 10 sur laquelle est ménagée en saillie une butée d'arrêt 11 qui limite le débattement dudit palonnier 4 par rapport à l'armature 3.

Lors de l'assemblage deux clous de verrouillage 12 et 13 sont engagés à force dans les logements 9 dont les dimensions sont légèrement inférieures à celles des clous 12 et 13 de manière qu'à leur passage les languettes 8 d'où les ergots 7 soient repoussés vers l'extérieur dans des orifices correspondants 14 pratiqués dans deux joues d'articulation 3b constituant l'extrémité de l'armature 3 et qui enserrent le dispositif d'articulation 6.

Le verrouillage effectif et l'articulation du palonnier 4 sur l'armature principale 3 sont ainsi effectués.

Selon une caractéristique de l'invention les clous de verouillage 12 et 13 sont obtenus avec le palonnier 4 au cours d'une même opération de moulage, les clous étant reliés au palonnier 4 par une fine toile 15 entourant le bord périphérique des logements 9 en pouvant être aisément arrachée lorsqu'une pression est exercée sur les clous 12 et 13 lors de l'assemblage.

## Revendications

1. Balai d'essuie glace pour pare brise de véhicule automobile du type comportant une lame de balayage (1) généralement en caoutchouc, ainsi qu'au moins une paire de palonniers intermédiaires (4) servant à l'accrochage et à la répartition des forces de pression de la lame (1) sur le pare brise et une armature principale (3) sur laquelle sont articulés les palonniers intermédiaires (4) qui comportent chacun un dispositif d'articulation et d'accrochage (6) obtenu de matière avec lui par moulage de matière plastique et constitué par deux ergots cylindriques (7) disposés chacun sur une partie souple qui constitue un côté d'au moins un logement (9), ménagé dans la partie centrale du palonnier (4) et dans lequel est engagé à force, lors de l'assemblage, une pièce de verrouillage de dimensions légèrement supérieures au logement de manière à repousser vers l'extérieur les parties souples d'où les ergots (7) dans des orifices correspondants (14) pratiqués dans deux joues d'articulation (3b) constituant une extrémité de l'armature principale 3, caractérisé en ce que la pièce de verrouillage est constituée par au moins un clou (12) dont l'introduction éloigne et maintienten position de verrouillage les deux ergots cylindriques (7) disposés aux extrémités libres de deux languettes souples (8) initialement incurvées l'une vers l'autre.

2. Balai d'essuie glace selon la revendication 1, caractérisé en ce que le clou de verrouillage (12) est obtenu avec le palonnier (4) au cours d'une même opération de moulage, le clou (12) étant relié palonnier (4) par une très fine toile (15) continue ou discontinue entourant le bord périphérique du logement (9) et pouvant être aisément arraché lorsqu'une pression est exercée sur le clou (12) lors de l'assemblage.

3. Balai d'essuie glace selon la revendication 1 caractérisé en ce que le verrouillage du dispositif d'articulation et d'accrochage (6) s'effectue par l'intermédiaire de deux clous (12 et 13) engagés à force dans deux logement correspondants (9) ménagés dans la partie médiane du palonnier et séparés par une cloison longitudinale (10) sur laquelle est ménagée en saillie une butée d'arrêt (11) qui limite le débattement dudit palonnier (4) par rapport à l'armature principale (3).

## Patentansprüche

1. Scheibenwischer für Windscheiben von Kraftfahrzeugen

— mit einem im allgemeinen aus Kautschuk bestehenden Wischerblatt (1),
— mit wenigstens einem Paar von Zwischenarmen (4) zur Befestigung des Wischerblattes (1) und zur Verteilung von dessen Druckkräften auf die Windschutzscheibe,
— sowie mit einem Hauptarm (3), mit welchem die Zwichenarme (4) gelenkig verbunden sind,
— wobei jeder der Zwischenarme (4) eine Gelenk- und Befestigungsvorrichtung (6) aufweist, die einstückig mit ihm als Kunststoffspritzgußteil hergestellt ist und aus zwei zylindrischen Zapfen (7) besteht, welche jeweils an einem eine Seite wenigstens einer Aufnahme (9) bildenden elastischen Teil angeordnet sind, welches in dem zentralen Teil des Zwischenarmes (4) angebracht ist und mit welchem beim Zusammenbau ein Verriegelungsstück kraftschlüssig in Eingriff gebracht wird, dessen Abmessungen etwas größer sind als diejenigen der Aufnahme, derart daß die elastischen Teile nach außen gedrückt und die an ihnen angebrachten Zapfen (7) in entsprechende Öffnungen (14) verbracht werden, welche an zweit ein Ende des Hauptarmes (3) bildenden Glenkbacken (3b) angebracht sind,

dadurch gekennzeichnet, daß das Verriegelungsstück von wenigstens einem Stift (12) gebildet ist, durch dessen Einführung die beiden an den freien Endbereichen zweier im Ruhezustand gegeneinander gekrümmten elastischen Zungen (8) angeordneten zylindrischen Zapfen (7) auslenkbar und in der Verriegelungsposition fixierbar sind.

2. Scheibenwischer nach Anspruch 1, dadurch gekennzeichnet, daß der Verriegelungsstift (12) in einem Spritzgußvorgang mit dem Zwischenarm (4) hergestellt und mit letzterem (4) durch eine sehr feine Zusammenhängende oder unzusammenhängende Wandung (15) verbunden ist, welche den äußeren Rand der Aufnahme (9) umgibt und die durch Ausübung eines Druckes auf den Stift (12) beim Zusammenbau leicht zerreißbar ist.

3. Scheibenwischer nach Anspruch 1, dadurch gekennzeichnet, daß die Verriegelung der Gelenk- und Befestigungsvorrichtung (6) mittels zweier Stifte (12 und 13) bewerkstelligt wird, die kraftschlüssig mit zwei entsprechenden in dem mittleren Teil des Zwischenarmes (4) angebrachte und durch eine longitudinale Scheidewand (10) voneinander getrennte Aufnahmen (9) gehalten sind und daß auf der longitudinalen Scheidewand (10) ein als Vorsprung ausgebildeter Endanschlag (11) angebracht ist, der die Verschwenkbarkeit des Zwischenarmes (4) relativ zu dem Hauptarm (3) begrenzt.

## Claims

1. A motor vehicle windscreen wiper of the type including a wiper blade (1) generally of rubber, together with at least one pair of intermediate yokes (4) serving to couple the blade (1) and to distribute the pressure forces thereof on the windscreen, and a main arm (3) on which the intermediate yokes (4) are pivoted, each of which yokes includes a coupling and pivoting device (6) obtained integrally therewith by moulding from plastics material and constituted by two cylindrical projections (7) each disposed on a flexible part which constitutes at least one side of a housing (9) formed in the central part of the yoke (4) and in which is forcibly engaged, during assembly, a locking component of dimensions slightly greater than the housing so as to push the flexible parts and thereby the projections (7) outwardly into corresponding holes 14 formed in the two pivot flanks (3b) constituting one end of the main arm (3), characterised in that the locking component is constituted by at least one pin (12) of which the introduction separates and maintains in locking position the two cylindrical projections (7) disposed at the free ends of two flexible tongues (8) which are initially curved inwardly one towards the other.

2. A windscreen wiper according to Claim 1, characterised in that the locking pin (12) is made with the yoke (4) during the same moulding operation, the pin (12) being connected to the yoke (4) by a very fine continuous or discontinuous web (15) surrounding the peripheral edge of the housing (9) and being capable of being readily removed when pressure is exerted on the pin (12) during assembly.

3. A windscreen wiper according to Claim 1 characterised in that locking of the coupling and pivoting device (6) is effected by means of two pins (12 and 13) forcibly engaged in two corresponding housings (9) formed in the median portion of the yoke and separated by a longitudinal partition (10) on which is formed a projecting stop abutment (11) which limits the clearance of said yoke (4) with respect to the main arm (3).

0 005 656

_FIG. 1_

_FIG. 2_

_FIG. 3_

_FIG. 4_

1